# EUROPÄISCHE PATENTANMELDUNG

(11) **EP 2 050 489 A1**
(43) Veröffentlichungstag der Anmeldung: **22.04.2009**
(21) Anmeldenummer: 08166577.0
(22) Anmeldetag: 14.10.2008
(51) Int. Cl.: B01D 35/30, B29C 45/16

(54) **Filtereinrichtung und Verfahren zur Herstellung derselben**

(30) Priorität: 19.10.2007 DE 102007050525
(71) Anmelder: MANN+HUMMEL GmbH, 71638 Ludwigsburg (DE)
(72) Erfinder: Kreiner, Anton, 94419, Reisbach (DE); Straßenberger, Norbert, 84166, Adlkofen (DE); Buchner, Bernd, 84160, Fronten (DE); Rabanter, Anton, 84163, Steinberg (DE)

(57) **Zusammenfassung**

Filtereinrichtung (1) mit einem Kunststoffmaterial aufweisenden Filtertopf (2), einem den Filtertopf (2) abschließenden Filterdeckel (3) und einem in dem Filtertopf (2) vorgesehenen Filterelement (4), wobei der Filtertopf (2) mindestens eine Markierungsfläche mit Markierungen (9) aufweist, welche durch Folienhinterspritzen mit einer die Markierungen (9) aufweisenden Kunststofffolie (8) gebildet ist. Herstellungsverfahren für eine Filtereinrichtung (1) mit einem Filtertopf (2), einem Filterdeckel (3) und einem Filterelement (4), wobei der Filtertopf (2) durch ein Spritzgussverfahren hergestellt und mittels Folienhinterspritzen mit einer Markierungen (9) aufweisenden Markierungsfläche versehen wird.

## Beschreibung

### Technisches Gebiet

Die vorliegende Erfindung betrifft eine Filtereinrichtung, die insbesondere als Kunststoffwechselfilter, wie zum Beispiel als Öl- oder Kraftstofffilter für Kraftfahrzeuge verwendet werden kann, und ein Verfahren zur Herstellung einer entsprechenden Filtereinrichtung. Wechselfilter dienen beispielsweise der Filtration von Kraftstoffen oder Schmierstoffen, um ein Versumpfen des jeweiligen Schmierkreislaufs oder eine Motorverschmutzung zu verhindern.

### Stand der Technik

Übliche Ölwechselfilter bestehen aus einem robusten Metallgehäuse oder Filtertopf, in dem ein Filterelement vorgesehen ist. Das zu filternde Öl tritt dann durch eine oder mehrere konzentrische Öffnungen in einem Deckel ein, durchströmt das Filterelement und tritt gereinigt an einer Öffnung des Filters beziehungsweise Filtertopfes aus. Zwar sind derartige aus Metall gefertigte Filtertöpfe stabil, weisen daher jedoch auch ein erhebliches Gewicht auf.

Es ist daher wünschenswert, entsprechende Wechselfilter auch aus Kunststoffmaterialien zu fertigen, um das Gewicht zu reduzieren, was gleichzeitig einen geringeren Kraftstoffverbrauch beim Einsatz in Kraftfahrzeugen nach sich zieht. Der Einsatz von Kunststoffen in der Fertigung derartiger Filter bringt jedoch auch Nachteile mit sich. Während Metallfilter leicht lackiert werden können und mit Markierungen auf der Außenseite versehen werden können, ist dies bei Kunststoff aufweisenden Filtertöpfen nur schwierig möglich. Dennoch ist es notwendig, das jeweilige Ölfilter beziehungsweise die Filtereinrichtung mit einer Beschriftung oder Markierung zu versehen.

Eine Laserbeschriftung kommt in der Regel nicht in Frage, da die verwendeten Kunststoffe zur Herstellung der Filter aus lasertransparentem Material bestehen. Auch eine Stempelung mit Markierungen lässt sich nur unter großem Aufwand realisieren, da zur Haftung der jeweiligen Stempelfarbe die Oberfläche fettfrei sein und vorbehandelt werden muss.

Auch häufig bei der Beschriftung von Kunststoffwerkstücken eingesetzte Heißprägeverfahren eignen sich nicht zur Beschriftung von Filtereinrichtungen, da dadurch eine Schwächung in der Filtertopfwandung auftritt, so dass, um eine ausreichende Stabilität auch mit einer entsprechenden Heißprägung zu gewährleisten, mehr Material notwendig ist. Heißprägeverfahren führen ferner zu einer Taktreduzierung im Herstellungsprozess, da die aufgeschmolzenen Markierungsstellen zunächst abkühlen müssen.

Vor dem Hintergrund dieser Problematik stellt sich die Aufgabe, eine verbesserte Filtereinrichtung zu schaffen, die weitestgehend aus Kunststoffmaterialien herstellbar ist und aufwandsgünstig realisierbare Markierungen oder Beschriftungen aufweist.

### Offenbarung der Erfindung

Diese Aufgabe wird durch eine Filtereinrichtung mit den Merkmalen des Patentanspruchs 1 gelöst.

Demgemäß weist eine Filtereinrichtung zumindest einen Filtertopf aus einem Kunststoffmaterial, ein den Filtertopf abschließenden Filterdeckel und ein in dem Filtertopf vorgesehenes Filterelement auf. Dabei hat der Filtertopf mindestens eine Markierungsfläche mit Markierungen, wobei die Markierungsfläche durch Folienhinterspritzen mit einer die Markierungen aufweisenden Kunststofffolie gebildet ist.

Die Markierungsfläche ist vorzugsweise auf einer Außenseite des Filtertopfes zum Beispiel mit einer Typenbezeichnung, einer Einbauanleitung für die Filtereinrichtung, einem Markennamen und/oder einer Herstellerbezeichnung versehen.

Da die Markierungsfläche mittels einer Folienhinterspritztechnik gebildet ist, entsteht insbesondere bei der Herstellung kein problematischer der eigentlichen Produktion der Filtereinrichtung nachgelagerter Verfahrensschritt. Bei der Folienhinterspritztechnik wird eine dekorierte Folie, also eine Kunststofffolie mit beispielsweise gedruckten Markierungen in das jeweilige Spritzgießwerkzeug eingelegt und mit dem verflüssigten Kunststoffmaterial für den Filtertopf hinterspritzt. Das Spritzgussbauteil, nämlich der Filtertopf aus Kunststoffmaterial ist damit nach dem Spritzgießvorgang bereits mit den Markierungen versehen.

Neben einfachen Markierungen können ferner in die Folie Hologramme oder sogar integrierte elektronische Chips eingebettet sein. Derartige Sicherheitsmerkmale helfen beispielsweise Originalersatzteile von Plagiaten zu unterscheiden. Ferner lassen sich durch Folienhinterspritzen praktisch beliebige Beschriftungen erzeugen, die auch unterschiedliche Farben haben können.

In einer bevorzugten Ausführungsform der Filtereinrichtung sind der Filtertopf und der Filterdeckel miteinander verschweißt. Dies kann zum Beispiel über Laserschweißen erfolgen, da in der Regel die verwendeten Kunststoffmaterialien Laserlichtdurchlässig sind. Beispielsweise ist ein geeignetes Material wie Polyamid ölbeständig und in einem Temperaturbereich von -40°C bis 150°C beständig. Ferner lassen sich entsprechende Materialien mit üblichen 800nm-Lasern verschweißen. Grundsätzlich sollte das verwendete Kunststoffmaterial beständig gegenüber einer Betriebsflüssigkeit des Kraftfahrzeugs sein.

Die Erfindung schafft ferner ein Verfahren zum Herstellen einer Filtereinrichtung, wie beispielsweise einer vorbeschriebenen Filtereinrichtung, die als Öl- oder Kraftstoffwechselfilter ausgeführt sein kann und zumindest einen Filtertopf, einen Filterdeckel und ein Filterelement aufweist. Dabei wird der Filtertopf durch ein Spritzgussverfahren hergestellt und mittels Folienhinterspritzen mit einer Markierungen aufweisenden Markierungsfläche versehen.

Als Verfahrensschritte kommt zum Beispiel in Frage: Einbringen einer Kunststofffolie als Markierungsfiäche in eine Werkzeugform für den Filtertopf, Einspritzen eines Kunststoffmaterials in die Werkzeugform und Vereinigen des eingespritzten Kunststoffmaterials mit der Kunststofffolie. Ferner wird vorzugsweise das Filterelement eingesetzt und der Filtertopf mit dem Filterdeckel verschlossen.

In einer Variante des Verfahrens wird die Kunststofffolie mittels elektrostatischer Aufladung oder mittels Vakuum an einer vorgegebenen Position in der Werkzeugform eingebracht. Je nach verwendetem Kunststoffmaterial für den Filtertopf beziehungsweise die Kunststofffolie lässt sich eine elektrostatische Aufladung erzielen, wodurch die Kunststofffolie an ihre exakte Position für die Markierungsfläche in der Werkzeugform angeordnet werden kann. Bei bestimmten, kaum elektrostatische Effekte zeigende Kunststoffmaterialien, wie beispielsweise Polyamid können auch Saugeinrichtungen, die ein Vakuum beziehungsweise einen Unterdruck erzeugen und an denen eine entsprechende Kunststofffolie haftet, verwendet werden.

Die Herstellung einer entsprechenden Filtereinrichtung gemäß dem vorbeschriebenen Verfahren hat den Vorteil, dass insbesondere für die Markierung keine aufwändige Behandlung der Oberfläche des Filtertopfes notwendig ist. Ferner ist die Anbringung einer Markierung oder Beschriftung auch auf beliebig geformten Bauteilen, wie beispielsweise der Rundung des Filtertopfes einfach realisierbar. Da sich beim Folienhinterspritzen die Folie mit dem Kunststoffmaterial des Filtertopfes verbindet, können auf diese Weise auch Markierungen angebracht werden, die komplexere Elemente, wie beispielsweise Mikrochips umfassen. Folienhinterspritzen wird auch als In-Mould Labeling, In-Mould Surfacing oder In-Mould Painting bezeichnet.

Das vorgeschlagene Verfahren hat insbesondere den Vorteil, dass keine Vorbehandlung der Kunststoffwechselfilter nötig ist, eine hohe Farbtiefe im Vergleich zu üblichen Druckverfahren möglich ist und bei Modellwechseln oder Herstellerbezeichnungswechseln ohne großen Aufwand die jeweilige Kunststofffolie verändert werden kann. Ferner entfällt ein sonst üblicher Produktionsschritt, wie er insbesondere bei metallbasierten Filtertöpfen notwendig ist, nämlich der der Beschriftung nach der Fertigstellung des Filters.

Weitere vorteilhafte Ausgestaltungen der Erfindung sind Gegenstand der Unteransprüche, sowie der im Folgenden beschriebenen Ausführungsbeispiele. Im Weiteren wird die Erfindung anhand bevorzugter Ausführungsbeispiele unter Bezugsnahme auf die Figuren näher erläutert.

### Kurze Beschreibung der Zeichnungen

Es zeigt dabei:

Fig. 1: eine Querschnittsansicht einer Ausführungsform einer Filtereinrichtung gemäß der Erfindung;

Fig. 2: ein Ablaufdiagramm einer Variante eines Herstellungsverfahrens für eine entsprechende Filtereinrichtung; und

Fig. 3: Darstellungen zur Erläuterung der Verfahrensschritte.

In den Figuren sind gleiche oder funktionsgleiche Elemente, sofern nichts anderes angegeben ist, mit denselben Bezugszeichen versehen worden.

### Ausführungsform(en) der Erfindung

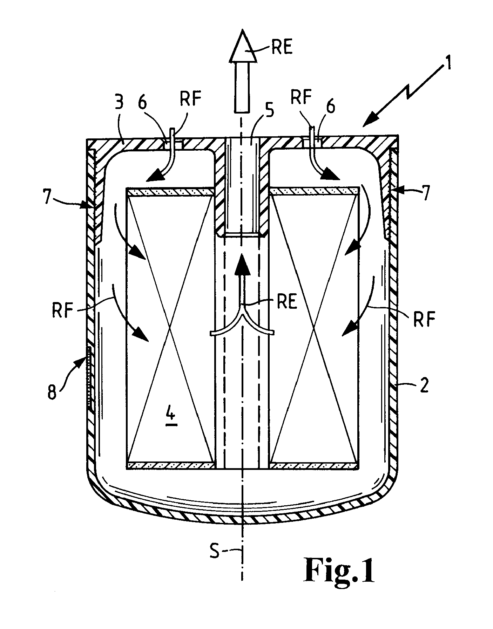

Die Fig. 1 zeigt eine Filtereinrichtung, beispielsweise als Ölfilter ausgestaltet, im Querschnitt. Die Filtereinrichtung 1 weist einen beispielsweise zylinderförmigen offenen Filtertopf 2 auf, in dem ein Filterelement 4 vorgesehen ist.

Das Filterelement 4 kann dabei ziehharmonikaförmig gefaltet sein und ein Filtervliesmaterial aufweisen. Dabei umläuft das zickzackförmig gefaltete Filterelement beispielsweise die Symmetrieachse S und schafft eine Grenzfläche zwischen einem Rohfluidbereich und Reinfluidbereich innerhalb des Filtertopfes 2.

Der Filtertopf ist in der Darstellung der Fig. 1 nach oben über einen Filterdeckel 3 abgeschlossen. Der Filterdeckel 3 hat eine Zentralöffnung 5 und weitere Öffnungen 6, durch die ein Rohfluid, wie beispielsweise Motoröl, in den Innenraum der Filtereinrichtung 1 einströmt. Dies ist über die Pfeile RF illustriert. Das zu filternde Öl tritt durch die Grenzfläche, welche aus dem Filterelementmaterial gebildet ist, und verlässt durch die zentrale Öffnung 5 im Filterdeckel 3 die Filtereinrichtung 1 als Reinfluid RE. Auch davon abweichende Fluid- bzw. Ölströmungen, wie zum Beispiel in entgegengesetzter Richtung sind dabei denkbar.

Selbstverständlich können weitere Elemente, wie Abdichtungen, Schläuche, Endscheiben oder Stabilisierungsmittel in einem entsprechenden Kunststoffwechselfilter vorgesehen werden. Die Fig. 1 zeigt eine entsprechende Filtereinrichtung lediglich schematisch.

Der Filtertopf 2 ist dabei aus einem Kunststoffmaterial im Wege eines Spritzgussverfahrens hergestellt. Dabei ist ferner eine Markierungsfläche 8 vorgesehen, die durch eine Kunststofffolie gebildet ist und mittels eines Folienhinterspritzens gebildet ist. Die mit Pfeilen 7 bezeichneten Stellen am oberen umlaufenden Rand des Filtertopfes 2 und an denen der Filterdeckel 3 anliegt, wird beispielsweise miteinander verschweißt. Dies kann insbesondere durch Laserschweißen geschehen.

Ein geeignetes, gegenüber Betriebsflüssigkeiten eines Kraftfahrzeugs beständiges Material für den Filtertopf 2 und auch den Filterdeckel 3 ist beispielsweise Polyamid. Insbesondere Polyamid PA6.6, welches mit einem Glasfaseranteil verstärkt ist, kann dabei zum Einsatz kommen. Durch die Beimischung von Glasfaser wird der Kunststoff verstärkt.

Die Filtereinrichtung hat zum Beispiel den Vorteil einer gegenüber Metallfiltern um 50 % reduzierten Masse. Da eine entsprechende Filtereinrichtung praktisch vollständig aus Kunststoffmaterial aufgebaut ist, kann diese ferner leicht und einfach durch Verbrennen entsorgt werden. Das relativ weiche Kunststoffmaterial kann auch kaum einen Aufnahmeflansch am jeweiligen Fahrzeug für beispielsweise den Ölwechselfilter beschädigen.

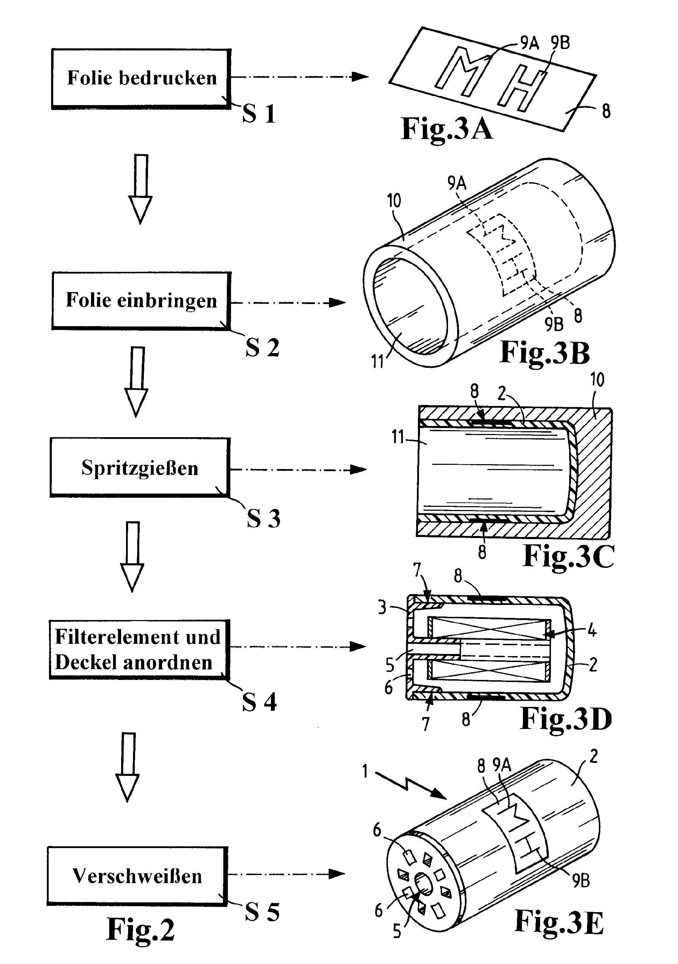

In der Fig. 2 ist beispielhaft ein Ablauf von Verfahrensschritten zur Herstellung einer entsprechenden Filtereinrichtung dargestellt. In der Fig. 3 sind die einzelnen Verfahrensschritte ferner illustriert.

In einem ersten Verfahrensschritt S1 wird eine Folie mit geeigneten Markierungen bedruckt. Die Folie besteht dabei vorzugsweise aus demselben Material, wie der durch ein Spritzgussverfahren zu erzeugende Filtertopf oder aus einem mit dem Material des Filtertopfes verträglichem Material. In der Fig. 3A ist eine Kunststofffolie, welche die jeweilige Markierungsfläche an der Filtertopfoberfläche darstellt, mit zwei Markierungen 9a, 9b illustriert.

Diese Folie, welche auch als Etikett bezeichnet werden kann, wird im Verfahrensschritt S2 in eine Spritzgussform beziehungsweise eine Werkzeugform eingebracht. Dabei wird die Kunststofffolie dort positioniert, wo die Markierungsfläche am zu erzeugenden Werkstück auftreten soll. Die Fig. 3B zeigt beispielhaft eine zylindrische Werkzeugform 10, beispielsweise aus Metall, mit einer Öffnung 11. Durch die Öffnung 11 kann die bedruckte Folie 8 eingebracht und positioniert werden. Zum Beispiel kann dies bei der Verwendung von Polyamidfolien durch Ansaugen mit einem geeigneten Sauger und Positionieren in dem Innenraum der Werkzeugform 10 erfolgen.

Beim Folienhinterspritzen oder auch IML- (In-Mould Labeling) Verfahren erfolgt im Folgeschritt S3 das Spritzgießen. Das heißt, heißes Kunststoffmaterial wird in die Werkzeugform hinter das bedruckte Etikett 8 eingespritzt. Dies ist in der Fig. 3C im Querschnitt illustriert. Das heiße thermoplastische Material liegt an der Innenwandung der Werkzeugform 10 an und bildet die Form des Filtertopfes 2 aus. Dabei vereinigen sich die Materialien der Kunststofffolie oder des Etiketts 8 mit dem Kunststoffmaterial des Filtertopfes 2. Somit ergibt sich bereits beim Herstellungsschritt des Kunststofftopfes als Filtertopf 2 die Markierungsfläche durch die mit Markierungen versehene Kunststofffolie 8.

In einem Folgeschritt S4 werden das Filterelement und der Filterdeckel angeordnet. In der Figur 3D ist dies im Querschnitt schematisch illustriert. In den mit der Markierungsfläche 8 und den Markierungen 9 versehenen Filtertopf 2 sind bereits das Filterelement 4 und der Deckel 3 eingesetzt. Um den Innenraum des Filtertopfes 2 zu verschließen, kann zum Beispiel an den mit den Pfeilen bezeichneten Stellen 7 der Filtertopf 2 mit dem Filterdeckel 3 verschweißt werden. Dies geschieht im Schritt S5. Es hat sich dabei besonders Laserschweißen als vorteilhaft erwiesen. Dabei kann auch das Kunststoffmaterial, aus dem der Filtertopf 2 und der Filterdeckel 3 gefertigt werden, mit geeigneten Pigmenten eingefärbt werden.

Schließlich ergibt sich, wie es in der Fig. 3F dargestellt ist, eine Filtereinrichtung 1, die auf ihrer Außenseite des Filtertopfes 2 eine Markierungsfläche 8 mit Markierungen 9 hat. Wie bereits bezüglich der Fig. 1 erläutert wurde, kann bei einer Ausführung als Ölwechselfilter durch die Öffnungen 6, zu reinigendes Motoröl eintreten, das innere Filterelement 4 durchfließen und als gereinigtes Motoröl durch die Zentralöffnung 5 austreten.

Das Einbringen der Folie im Schritt S2 kann zum Beispiel durch einen Roboter durchgeführt werden, der von einem vorgefertigten Stapel von entsprechenden Kunststofffolien 8 diese in eine Vorzentrierstation legt. Mittels eines Greifers nimmt der Roboter die Folie dann aus der Vorzentrierstation und legt sie in den als negative Form des Filtertopfes ausgeführten Greifer. In dem entsprechenden Greifer wird die Folie zum Beispiel durch ein Vakuum gehalten und in das Werkzeug, wie in der Fig. 3B dargestellt ist, eingebracht. Das Werkzeug kann zum Beispiel mit Vakuumrillen ausgeführt sein, wodurch die Folie bis zum Eintreten der Schmelze durch das Einspritzen des heißen Kunststoffes an der gewünschten Position gehalten wird.

Die Beschriftung beziehungsweise Markierung durch In-Mould Labeling hat eine Reihe von Vorteilen. Es ergeben sich zum Beispiel ein verzugsfreies Schriftbild und ein hitzebeständiger Druck. Dadurch, dass der Druck beziehungsweise die Markierungen 9A, 9B auf der jeweiligen Labelinnenseite, also in Richtung zu dem eingespritzten Kunststoffmaterial, aufgebracht werden können, ergibt sich eine hervorragende Chemikalienbeständigkeit der Markierungen. Die Markierungen entstehen somit zwischen der Kunststofffolie und dem Material des Filtertopfes.

Obwohl die vorliegende Erfindung anhand bevorzugter Ausführungsbeispiele näher erläutert wurde, ist sie nicht darauf beschränkt sondern vielfältig modifizierbar. Insbesondere die Form der Filtereinrichtung kann an die durch die Anwendung vorgegebenen Gegebenheiten angepasst werden. Obwohl am Beispiel eines Ölwechselfilters erläutert, kann die Filtereinrichtung auch als andere Fluide filternde Einrichtung implementiert werden.

Die genannten Materialien sind lediglich beispielhaft zu verstehen, wobei prinzipiell jedes thermoplastische Material, welches sich für ein Spritzgussverfahren eignet, sowohl für die Kunststofffolie mit den Markierungen wie auch für den Filtertopf verwendet werden kann. Die dargestellte Form und Ausführung der Filtereinrichtung ist lediglich schematisch dargestellt. Weitere Elemente, wie beispielsweise Dichtringe, Verstrebungen oder ergänzende Teile sind darüber hinaus denkbar.

## Patentansprüche

1. Filtereinrichtung (1) mit einem Kunststoffmaterial aufweisenden Filtertopf (2), einem den Filtertopf (2) abschließenden Filterdeckel (3) und einem in dem Filtertopf (2) vorgesehenen Filterelement (4), wobei der Filtertopf (2) mindestens eine Markierungsfläche mit Markierungen (9) aufweist, welche durch Folienhinterspritzen mit einer die Markierungen (9) aufweisenden Kunststofffolie (8) gebildet ist.

2. Filtereinrichtung (1) nach Anspruch 1, wobei die Markierungsfläche auf einer Außenseite des Filtertopfes (1), insbesondere mit einer Typenbezeichnung, einer Einbauanleitung für die Filtereinrichtung (1), einem Markennamen und/oder einer Herstellerbezeichnung versehen ist.

3. Filtereinrichtung (1) nach Anspruch 1 oder 2, wobei die Markierungen (9) mehrfarbig sind, ein Hologramm umfassen oder einen integrierten elektronischen Chip umfassen.

4. Filtereinrichtung (1) nach einem der Ansprüche 1 - 3, wobei der Filtertopf (2) und der Filterdeckel (3) miteinander verschweißt sind.

5. Filtereinrichtung (1) nach einem der Ansprüche 1 - 4, wobei das Kunststoffmaterial laserlichtdurchlässig ist.

6. Filtereinrichtung (1) nach einem der Ansprüche 1 - 5, wobei das Kunststoffmaterial beständig gegenüber einer Betriebsflüssigkeit eines Kraftfahrzeugs ist.

7. Filtereinrichtung (1) nach einem der Ansprüche 1 - 6, wobei die Filtereinrichtung (1) ein Öl- oder Kraftstoffwechselfilter ist.

8. Filtereinrichtung (1) nach einem der Ansprüche 1 - 6, wobei das Kunststoffmaterial und/oder die Kunststofffolie (8) Polyamid aufweist.

9. Verfahren zum Herstellen einer Filtereinrichtung (1), insbesondere nach einem der Ansprüche 1 - 8, mit einem Filtertopf (2), einem Filterdeckel (3) und einem Filterelement (4), wobei der Filtertopf (2) durch ein Spritzgussverfahren hergestellt und mittels Folienhinterspritzen mit einer Markierungen (9) aufweisenden Markierungsfläche versehen wird.

10. Verfahren nach Anspruch 9, wobei die folgenden Verfahrensschritte durchgeführt werden:
- Einbringen einer Kunststofffolie (8) als Markierungsfläche in eine Werkzeugform (10) für den Filtertopf (2);
- Einspritzen eines Kunststoffmaterials in die Werkzeugform (10); und
- Vereinigen des eingespritzten Kunststoffmaterials mit der Kunststofffolie (8).

11. Verfahren nach Anspruch 10, ferner umfassend:
- Einsetzen des Filterelements (4); und
- Verschließen des Filtertopfes (2) mit dem Filterdeckel (3).

12. Verfahren nach Anspruch 10 oder 11, wobei die Kunststofffolie (8) mittels elektrostatischer Aufladung oder mittels eines Vakuums an eine Position in die Werkzeugform (10) eingebracht wird.

13. Verfahren nach einem der Ansprüche 9 - 12, wobei der Filtertopf (2) mit dem Filterdeckel (3) verschweißt wird, insbesondere dabei mittels Laserschweißen verschweißt wird.

14. Verfahren nach einem der Ansprüche 9 - 13, wobei die Kunststofffolie (8) mit einer Typenbezeichnung, einer Einbauanleitung für die Filtereinrichtung, einem Markennamen und/oder einer Herstellerbezeichnung versehen wird.
